# EUROPEAN PATENT APPLICATION

(11) **EP 4 818 683 A1**
(43) Date of publication of application: **07.10.2026**
(21) Application number: 26168500.2
(22) Date of filing: 27.03.2026
(51) Int. Cl.: G01N 23/046

(54) **SCANNING APPARATUS AND METHOD FOR SCANNING PLURALITY OF COMPONENTS**

(30) Priority: 01.04.2025 GB 202504839
(71) Applicant: Rolls-Royce plc, London N1 9FX (GB)
(72) Inventor: Mulloth, Akhil, Derby, DE24 8BJ (GB)
(74) Representative: Rolls-Royce plc

(57) **Abstract**

A method (200) for scanning a plurality of components (102) of similar design includes providing an imaging beam source (108), an imaging beam receiver (114), and a support platform (104). The method (200) includes disposing the plurality of components (102) on the support platform (104) such that the plurality of components (102) is positioned axi-symmetrically and spaced apart from each other by a first angular range (AR1). The method (200) further includes collecting a first projection (120) of at least one component (102) of the plurality of components (102) at the imaging beam receiver (114). The first projection (120) includes a combination of a primary image (PI) of the at least one component (102) and a scatter image (SI) of the at least one component (102). The method (200) further includes collecting a second projection (122) of the at least one component (102) at the imaging beam receiver (114).

## Description

### CROSS REFERENCE TO RELATED APPLICATIONS

This represents the first application directed towards the subject-matter.

### FIELD

This disclosure relates to a scanning apparatus, and in particular, to a method for scanning a plurality of components of similar design.

### BACKGROUND

X-ray scans such as computed tomography (CT) scans are conventionally used in industry for detecting defects such as voids, cracks, and inclusions, based on differences in X-ray absorption in these regions. CT techniques can also be used for investigative work on subjects such as aerofoil blades, and in particular, turbine blades of gas turbine engines. In particular, CT may be used to produce three-dimensional (3D) representations of a component. Generally, during a CT scan, x-ray beams that are generated by an x-ray source penetrate the subject to be scanned. The x-ray beam, after being attenuated by different densities of material within the subject, impinges upon an array of radiation detectors. The array of radiation detectors produces electrical signals indicative of the attenuated x-ray beam, thereby generating an x-ray image.

To produce a 3D model, 2D images of the component are taken from multiple angles and the images are computationally combined. 3D CT is an emerging technology for the inspection of dense metal parts such as those produced by additive manufacturing that can have non-line of sight surfaces and cannot be inspected by other methods. A 3DCT scan typically involves rotating the component about an axis, either through a full 360-degree rotation or a partial rotation. The axis of rotation can lie in a flat plane, be inclined, or follow a more complex 3D trajectory. During scanning, part of the x-rays is attenuated by a material of the component, some are scattered, and the remaining are transmitted through the component to fall on the detector. 2D x-ray images are significantly affected by scatter. Original equipment manufacturers (OEMs) have therefore developed technologies, e.g. hardware and software, to correct scatter and thereby reduce errors.

In addition to 3D CT, 2D CT is another form of CT where the detector is a linear detector rather than a 2D detector. 2D CT can only create a thin cross-section image of the part compared to 3D CT which generated the full volumetric data. However, 2D CT has the advantage of being less affected by scatter. However, 3D CT is more sensitive to scatter, particularly when scanning multiple dense objects, which can significantly degrade image quality. Conventional scatter correction solution often requires a reference scan that is free of scatter. These reference scans quantify scatter in each x-ray projections and facilitate removal of the scatter during image reconstruction. Traditional scatter correction methods involve creating a reference image for each X-ray projection. This reference image is created using a variety of methods that range from scatter free 2DCT scans stacked to form a 3D volume, to scatter correct grids or scatter reduction arrays or even simulations. However, the creation of the reference image from the stack of 2DCT scans is time consuming. Accordingly, in case of multi-part scanning, the scanning time to create reference images is significantly increased, which is not desired.

### SUMMARY

According to a first aspect, a method for scanning a plurality of components of similar design is provided. The method includes providing an imaging beam source, an imaging beam receiver, and a support platform. The imaging beam source and the imaging beam receiver are oppositely disposed to either side of the support platform. The method further includes disposing the plurality of components on the support platform such that the plurality of components is positioned axi-symmetrically and spaced apart from each other by a first angular range. The method further includes generating, by the imaging beam source, an imaging beam that passes through the plurality of components. The method further includes collecting a first projection of at least one component of the plurality of components at the imaging beam receiver. The first projection includes a combination of a primary image of the at least one component and a scatter image of the at least one component. The primary image includes a scatter free projection of the at least one component. The method further includes collecting a second projection of the at least one component at the imaging beam receiver. The second projection includes the primary image of the at least one component. The method further includes comparing, by a processor, the first projection and the second projection. The method further includes generating, by the processor, the scatter image based on the comparison of the first projection and the second projection. The method further includes storing, by the processor, the scatter image of the at least one component in a memory. The method further includes rotating and/or revolving the support platform by a second angular range relative to the imaging beam source and the imaging beam receiver about one or more axes. The second angular range is equal to the first angular range or greater than the first angular range by at most 20 degrees. The method further includes collecting, at different relative angles of rotation and/or revolution of the support platform by the second angular range, further projections of the plurality of components at the imaging beam receiver. The method further includes comparing, by the processor, the further projections and the scatter image. The method further includes generating, by the processor, further primary images of the plurality of components based on the comparison of the further projections and the scatter image. The further primary images include corresponding further scatter free projections of the plurality of components.

With axi-symmetric arrangement of the plurality of components of similar design on the support platform, and with each component spaced apart by a predetermined angular range (i.e., the first angular range), the method of the present disclosure may eliminate a need for a full 360-degrees rotation for collecting projections of various components. This arrangement of the plurality of components of similar design may ensure periodic repetition of projections at different relative angles of rotation and/or revolution of the support platform by the second angular range. Such periodic repetition of the projections may enable the method of the present disclosure to perform scatter correction only once. This may significantly reduce scanning time and computational efforts required to generate the reference scatter image, which was otherwise needed to be generated for each projection in conventional scanning methods. Therefore, the method of the present disclosure may improve efficiency and accuracy of the scanning process for investigating the plurality of components of similar design. Accordingly, the method of the present disclosure may enable the simultaneous and effective scanning of the plurality of components of similar design, which may further reduce operational cost involved with the scanning.

It should be noted that "components of similar design" refers to components that have similar shape, or components that are axi-symmetric (i.e., symmetrical around one axis). For examples, components, such as gears will be considered as components of similar design.

In some embodiments, comparing the first projection and the second projection includes subtracting the second projection from the first projection. Further, the method includes generating the scatter image based on subtraction of the second projection from the first projection. In other applications, the first projection may be subtracted from the second projection. By subtracting the second projection from the first projection (or the first projection from the second projection), a reference scatter image is generated, which may be used for scatter correction for further projections at different relative angles of rotation and/or revolution of the support platform by the second angular range.

In some embodiments, comparing the further projections and the scatter image includes subtracting the scatter image from each of the further projections. Further, the method includes generating the further primary images of the plurality of components based on subtraction of the scatter image from each of the corresponding further projections. The reference scatter image is then subtracted from the further projections of the plurality of components. Accordingly, a high-quality primary image is obtained in each of the further projections while minimizing an impact of scatter.

In some embodiments, the first angular range is at least 5 degrees, at least 10 degrees, at least 20 degrees, at least 30 degrees, at least 45 degrees, at least 60 degrees, at least 90 degrees, at least 120 degrees, at least 135 degrees, at least 150 degrees, at least 170 degrees, at least 200 degrees, at least 230 degrees, or at least 270 degrees.

In some embodiments, the second angular range is at least 5 degrees, at least 10 degrees, at least 15 degrees, at least 25 degrees, at least 35 degrees, at least 50 degrees, at least 65 degrees, at least 95 degrees, at least 125 degrees, at least 140 degrees, at least 155 degrees, at least 175 degrees, at least 200 degrees, at least 230 degrees, at least 270 degrees, or at least 290 degrees.

In some embodiments, the plurality of components is positioned axi-symmetrically in a two-dimensional geometrical figure, such as a circle, a triangle, an ellipse, a rectangle, a square, or a polygon. For example, the plurality of components is positioned on vertices of a triangle. For example, the plurality of components is positioned on vertices of a square.

In some embodiments, the plurality of components is positioned axi-symmetrically in a three-dimensional geometrical figure, such as an ellipsoid, a sphere, a cube, a cuboid, a prism, or a cylinder. This arrangement of the plurality of components in the three-dimensional geometrical figure may ensure proper utilization of available space to accommodate the plurality of components on the support platform. For example, the plurality of components is positioned on corners of a cube.

In some embodiments, the plurality of components is positioned axi-symmetrically in two or more concentric geometrical figures. This may ensure proper utilization of available space to accommodate the plurality of components on the support platform.

In some embodiments, the two or more concentric geometrical figures have same shapes. For example, some of the components may be positioned axi-symmetrically in a first circle and rest of the components may be positioned axi-symmetrically in a second circle that is concentric with the first circle.

In some embodiments, the two or more concentric geometrical figures have different shapes. For example, some of the components may be positioned axi-symmetrically in a circle and rest of the components may be positioned axi-symmetrically in a square that is concentric with the circle.

In some embodiments, the method further includes maintaining substantially similar imaging parameters while collecting the further projections. By maintaining substantially similar imaging parameters, a consistent image quality may be obtained for all further projections of the plurality of components. Imaging parameters may include a distance between different components of a scanning apparatus, a voltage of the imaging beam source, and so on.

In some embodiments, the plurality of components is positioned offset from the one or more axes of rotation and/or revolution. This means that centres of the plurality of components are displaced from the one or more axes of rotation and/or revolution. This may improve image quality and contrast of the scan. This may also reduce the concave wall effect.

In some embodiments, the method further includes selectively disposing an anti-scatter unit either between the support platform and the imaging beam receiver or between the support platform and the imaging beam source. Placement of the anti-scatter unit either between the support platform and the imaging beam receiver or between the support platform and the imaging beam source may eliminate scattered radiation, thereby improving clarity and accuracy of the image. The anti-scatter unit is mainly used to obtain a scatter free image of an object.

In some embodiments, collecting the second projection of the at least one component at the imaging beam receiver further includes collecting the second projection of the at least one component at the imaging beam receiver while the anti-scatter unit is disposed between the support platform and the imaging beam receiver, or between the support platform and the imaging beam source. By placing the anti-scatter unit between the support platform and the imaging beam receiver, or between the support platform and the imaging beam source, the scattered radiation may be filtered. Accordingly, the reference scatter image (the second projection) may be generated, which may be used for scatter correction in the further projections.

In some embodiments, the anti-scatter unit includes an anti-scatter grid, a beam stopper, a hole plate array, or a collimation grid. The anti-scatter grid is often used in CT scanning to reduce the scattered radiation generated from an object to be scanned. The hole plate array may block the imaging beam from deviating from a primary beam path, thereby capturing scatter free projections at the imaging beam receiver.

According to a second aspect, a scanning apparatus for scanning a plurality of components of similar design is provided. The scanning apparatus includes an imaging beam source configured to generate an imaging beam that passes through the plurality of components. The scanning apparatus further includes an imaging beam receiver configured to receive the imaging beam, such that the plurality of components is disposed between the imaging beam source and the imaging beam receiver. The scanning apparatus further includes an anti-scatter unit. The scanning apparatus further includes a support platform configured to support the plurality of components. The support platform is configured to rotate and/or revolve relative to the imaging beam source and the imaging beam receiver about one or more axes. The support platform is disposed between the imaging beam source and the imaging beam receiver. The plurality of components is positioned axi-symmetrically and spaced apart from each other by a first angular range. The scanning apparatus further includes a processor communicably coupled to the imaging beam receiver and configured to collect, in absence of the anti-scatter unit, a first projection of at least one component of the plurality of components at the imaging beam receiver. The first projection includes a combination of a primary image of the at least one component and a scatter image of the at least one component. The primary image includes a scatter free projection of the at least one component. The processor is further configured to collect, in presence of the anti-scatter unit, a second projection of the at least one component at the imaging beam receiver. The second projection includes the primary image of the at least one component. The processor is further configured to compare the first projection and the second projection. The processor is further configured to generate the scatter image based on the comparison of the first projection and the second projection. The processor is further configured to store the scatter image of the at least one component in a memory. The processor is further configured to collect, at different relative angles of rotation and/or revolution of the support platform and in absence of the anti-scatter unit, further projections of the plurality of components at the imaging beam receiver. The support platform is configured to rotate and/or revolve by a second angular range relative to the imaging beam source and the imaging beam receiver about one or more axes. The second angular range is equal to or greater than the first angular range by at most 20 degrees. The processor is further configured to compare the further projections and the scatter image. The processor is further configured to generate further primary images of the plurality of components based on the comparison of the further projections and the scatter image. The further primary images include corresponding further scatter free projections of the plurality of components.

With axi-symmetric arrangement of the plurality of components of similar design on the support platform, and with each component spaced apart by a predetermined angular range (i.e., the first angular range), the scanning apparatus of the present disclosure may eliminate a need for a full 360-degrees rotation for collecting projections of various components. This arrangement of the plurality of components of similar design may ensure periodic repetition of projections at different relative angles of rotation and/or revolution of the support platform by the second angular range. Such periodic repetition of the projections may enable the scanning apparatus of the present disclosure to perform scatter correction only once. Accordingly, the scanning apparatus of the present disclosure may enable the simultaneous and effective scanning of the plurality of components, which may further reduce operational cost involved with the scanning.

In some embodiments, the processor is further configured to compare the first projection and the second projection by subtracting the second projection from the first projection. The processor is further configured to generate the scatter image by subtracting the second projection from the first projection. In other applications, the first projection may be subtracted from the second projection. By subtracting the second projection from the first projection (or the first projection from the second projection), a reference scatter image is generated, which may be used for scatter correction for further projections at different relative angles of rotation and/or revolution of the support platform by the second angular range. Moreover, the scatter image is saved in the memory of the processor.

In some embodiments, the processor is further configured to compare the further projections and the scatter image by subtracting the scatter image from each of the further projections. The processor is further configured to generate the further primary images of the plurality of components by subtracting the scatter image from each of the corresponding further projections. Accordingly, a high-quality image is obtained while minimizing an impact of scatter.

In some embodiments, the plurality of components is positioned offset from the one or more axes of rotation and/or revolution. This may improve image quality and contrast of the scan. This may also reduce the concave wall effect.

In some embodiments, the anti-scatter unit is selectively disposed either between the support platform and the imaging beam receiver, or between the support platform and the imaging beam source. Placement of the anti-scatter unit either between the support platform and the imaging beam receiver or between the support platform and the imaging beam source may eliminate scattered radiation, thereby improving clarity and accuracy of the image.

In some embodiments, the anti-scatter unit includes an anti-scatter grid, a beam stopper, a hole plate array, or a collimation grid.

### BRIEF DESCRIPTION OF THE DRAWINGS

Embodiments will now be described by way of example only with reference to the accompanying drawings, in which:
**FIG.** 1 shows a schematic sectional side view of a gas turbine engine;
**FIG.** 2 is a schematic view of a scanning apparatus for scanning a plurality of components of similar design and collecting a first projection while a support platform of the scanning apparatus is in a first position, in accordance with an embodiment of the present disclosure;
**FIG.** 3 is a schematic view of the scanning apparatus of **FIG.** 2 for collecting a second projection, in accordance with an embodiment of the present disclosure;
**FIG.** 4 is a schematic view of the scanning apparatus of **FIG.** 2 while the support platform is shown in a second position, in accordance with an embodiment of the present disclosure; and
**FIG.** 5 is a flowchart of a method for scanning a plurality of components of similar design, in accordance with an embodiment of the present disclosure.

### DETAILED DESCRIPTION

Aspects and embodiments of the present disclosure will now be discussed with reference to the accompanying Figures. Further aspects and embodiments will be apparent to those skilled in the art.

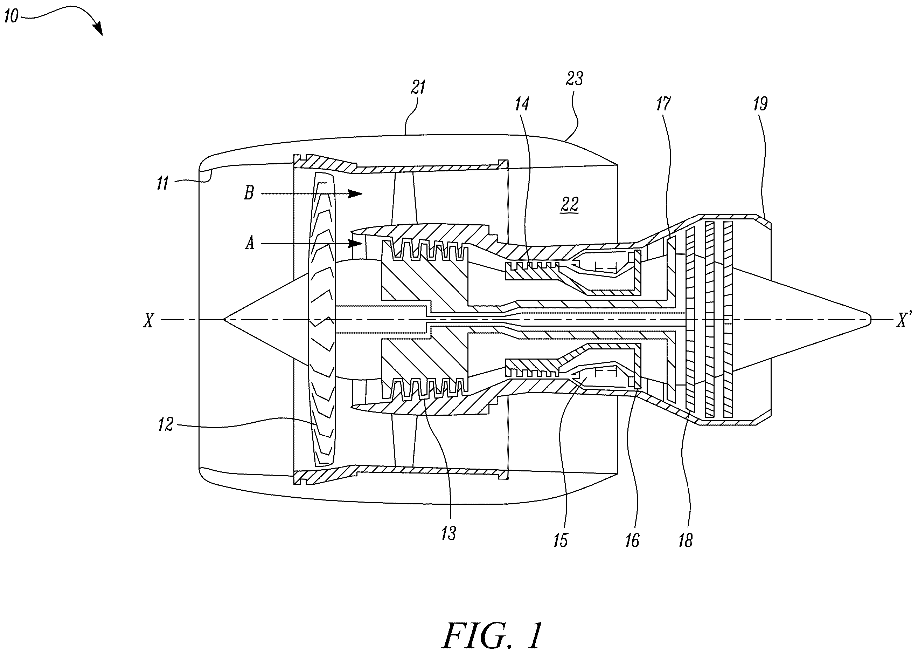

**FIG. 1** shows a schematic sectional side view of a gas turbine engine 10 having a principal rotational axis X-X'. The gas turbine engine 10 includes, in axial flow series, an air intake 11, a compressive fan 12 (which may also be referred to as a low-pressure compressor), an intermediate pressure compressor 13, a high-pressure compressor 14, a combustion equipment 15, a high-pressure turbine 16, an intermediate pressure turbine 17, a low-pressure turbine 18, and a core exhaust nozzle 19. A nacelle 21 generally surrounds the gas turbine engine 10 and defines the air intake 11, a bypass duct 22, and a bypass exhaust nozzle 23.

The gas turbine engine 10 works in a conventional manner so that the air entering the air intake 11 is accelerated by the compressive fan 12 to produce two air flows: a first air flow A into the intermediate pressure compressor 13 and a second air flow B which passes through the bypass duct 22 to provide a propulsive thrust. The intermediate pressure compressor 13 compresses the first air flow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resulting hot combustion products then expand through, and thereby drive the high, intermediate, and low-pressure turbines 16, 17, 18 before being exhausted through the core exhaust nozzle 19 to provide additional propulsive thrust. The high, intermediate, and low-pressure turbines respectively drive the high and intermediate pressure compressors, 14, 13, and the compressive fan 12 by suitable interconnecting shafts.

In some embodiments, the gas turbine engine 10 is used in an aircraft. In some embodiments, the gas turbine engine 10 is an ultra-high bypass ratio engine (UHBPR). In addition, the present invention is equally applicable to aero gas turbine engines, marine gas turbine engines and land-based gas turbine engines.

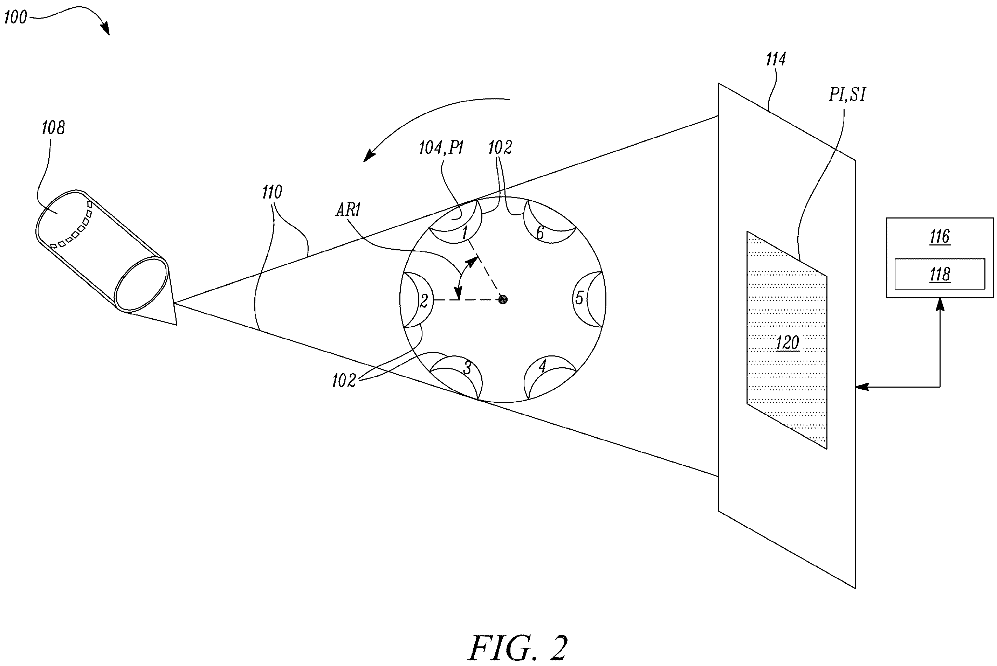

**FIG. 2** is a schematic view of a scanning apparatus 100 for scanning a plurality of components 102 of similar design and collecting a first projection 120, in accordance with an embodiment of the present disclosure. The scanning apparatus 100 performs a computational tomography (CT), preferably a three-dimensional CT, of the component. In some embodiments, the plurality of components 102 is a part of the gas turbine engine 10 (shown in **FIG. 1****).** In other embodiments, the plurality of components 102 is a part of another prime mover or a machine. In some embodiments, the plurality of components 102 includes turbine blades or compressor blades of the gas turbine engine 10 (shown in **FIG. 1****).** In some embodiments, the plurality of components 102 is metallic. The plurality of components 102 is shown schematically in **FIG. 2** for the purpose of illustration. Other shapes and designs for the plurality of components 102 are foreseeable and could be used.

It should be noted that "components of similar design" refers to components that have similar shape, or components that are axi-symmetric (i.e., symmetrical around one axis). For examples, components, such as gears will be considered as components of similar design. By similar design of the plurality of components 102, it may also mean that an overall shape and dimensions of each component 102 are similar to each other, neglecting variation in tolerances and machining.

Further, the scanning apparatus 100 includes an imaging beam source 108 configured to generate an imaging beam 110 that passes through the plurality of components 102. In some embodiments, the imaging beam source 108 is an electromagnetic source, such as an x-ray source or a gamma-ray source. The imaging beam source 108 is capable of emitting the imaging beam 110 in the electromagnetic spectrum that can penetrate or be transmitted through a material after attenuation. In some embodiments, the x-ray source may be one of a reflective x-ray source or a transmissive x-ray source.

The scanning apparatus 100 further includes an imaging beam receiver 114 configured to receive the imaging beam 110, such that the plurality of components 102 is disposed between the imaging beam source 108 and the imaging beam receiver 114. In response to receiving the imaging beam 110, an image may be generated at the imaging beam receiver 114. The scanning apparatus 100 further includes a support platform 104 configured to support the plurality of components 102. In other words, the plurality of component 102 is disposed on the support platform 104. Further, the support platform 104 is configured to rotate and/or revolve relative to the imaging beam source 108 and the imaging beam receiver 114 about one or more axes. The support platform 104 is disposed between the imaging beam source 108 and the imaging beam receiver 114.

As shown in **FIG. 2****,** the plurality of components 102 is positioned axi-symmetrically and spaced apart from each other by a first angular range AR1. In the illustrated embodiment of **FIG. 2****,** six components (depicted by numerals 1, 2, 3, 4, 5, and 6) are shown to be disposed axi-symmetrically on the support platform 104. In some embodiments, the number of components may be less than 6 or more than 6. However, it should be noted that the plurality of components 102 should be arranged axi-symmetrically with each component 102 spaced apart by a predetermined angular range, for example, the first angular range AR1. In some embodiments, the plurality of components 102 is positioned offset from the one or more axes of rotation and/or revolution. This may improve image quality and contrast of the scan. This may also reduce the concave wall effect.

In the illustrated embodiment of **FIG. 2****,** the first angular range AR1 is shown as 60 degrees. In other words, the plurality of components 102 is shown to be spaced apart from each other by 60 degrees. However, it may vary based on the number of components 102 disposed on the support platform 104 or based on application requirements. In some embodiments, the first angular range AR1 is at least 5 degrees, at least 10 degrees, at least 20 degrees, at least 30 degrees, at least 45 degrees, at least 60 degrees, at least 90 degrees, at least 120 degrees, at least 135 degrees, at least 150 degrees, at least 170 degrees, at least 200 degrees, at least 230 degrees, or at least 270 degrees.

In some embodiments, the plurality of components 102 is positioned axi-symmetrically in a two-dimensional geometrical figure, such as a circle, a triangle, an ellipse, a rectangle, a square, or a polygon. For example, the plurality of components is positioned on vertices of a triangle. For example, the plurality of components is positioned on vertices of a square.

In some embodiments, the plurality of components 102 is positioned axi-symmetrically in a three-dimensional geometrical figure, such as an ellipsoid, a sphere, a cube, a cuboid, a prism, or a cylinder. This arrangement of the plurality of components 102 in the three-dimensional geometrical figure may ensure proper utilization of available space to accommodate the plurality of components 102 on the support platform 104. For example, the plurality of components 102 is positioned on corners of a cube.

In some embodiments, the plurality of components 102 is positioned axi-symmetrically in two or more concentric geometrical figures. In some embodiments, the two or more concentric geometrical figures have same shapes. For example, some of the components 102 may be positioned axi-symmetrically in a first circle and rest of the components 102 may be positioned axi-symmetrically in a second circle that is concentric with the first circle. In other embodiments, the two or more concentric geometrical figures have different shapes. For example, some of the components 102 may be positioned axi-symmetrically in a circle and rest of the components 102 may be positioned axi-symmetrically in a square that is concentric with the circle.

The scanning apparatus 100 further includes a processor 116 communicably coupled to the imaging beam receiver 114. The processor 116 further includes a memory 118 configured to store processor-executable instructions, which, on execution, may cause the processor 116 to perform one or more operations. The processor 116 may be a controller, a control circuit, a computer, a microprocessor, a microcomputer, a central processing unit, or any suitable device or apparatus. The processor 116 may be a digital processor, an analog processor, a digital circuit designed to process information, an analog circuit designed to process information, a state machine, and/or other mechanisms for electronically processing information.

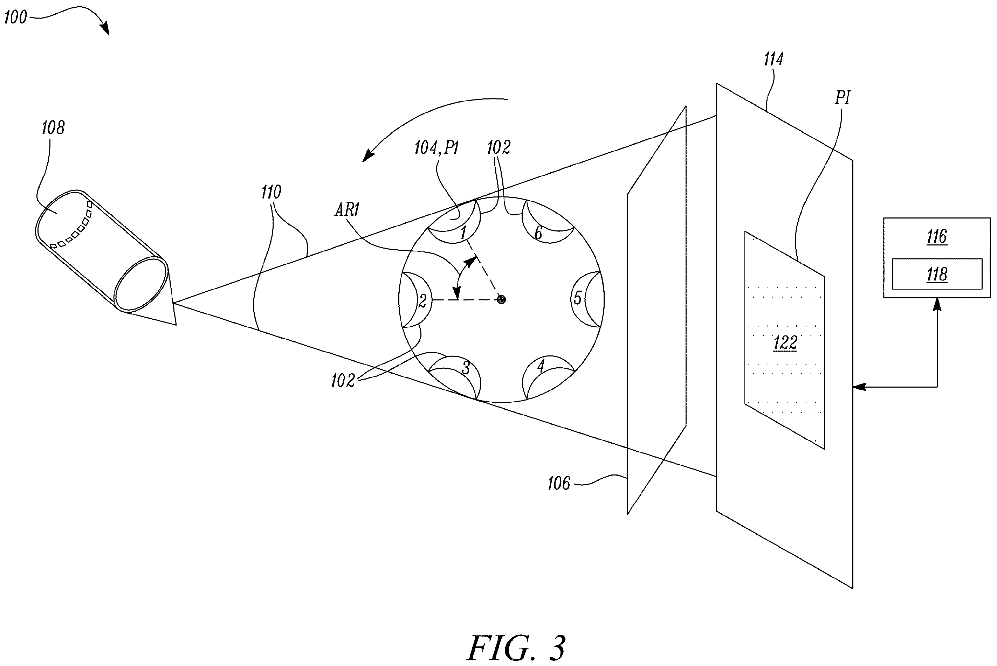

**FIG. 3** is a schematic view of the scanning apparatus 100 of **FIG. 2** for collecting a second projection 122, in accordance with an embodiment of the present disclosure. As shown in **FIG. 3****,** the scanning apparatus 100 further includes an anti-scatter unit 106. Further, the anti-scatter unit 106 is selectively disposed either between the support platform 104 and the imaging beam receiver 114, or between the support platform 104 and the imaging beam source 108. In the illustrated embodiment of **FIG. 3****,** the anti-scatter unit 106 is disposed between the support platform 104 and the imaging beam receiver 114.

In some embodiments, the anti-scatter unit 106 includes an anti-scatter grid, a beam stopper, a hole plate array, or a collimation grid. The anti-scatter grid is often used in CT scanning to reduce the scattered radiation generated from an object to be scanned. The hole plate array may block the imaging beam from deviating from a primary beam path, thereby capturing scatter free projections at the imaging beam receiver 114. In the illustrated embodiment of **FIG. 3****,** the anti-scatter unit 106 includes an anti-scatter grid. Further, in the illustrated embodiment of **FIG. 2****,** the anti-scatter unit 106 is not used (and hence not shown in **FIG. 2****)** for collecting the first projection 120.

Referring to **FIGS. 2** **and** **3****,** the processor 116 is configured to collect, in absence of the anti-scatter unit 106, the first projection 120 of at least one component 102 of the plurality of components 102 at the imaging beam receiver 114. The first projection 120 includes a combination of a primary image PI of the at least one component 102 and a scatter image SI of the at least one component 102. The primary image PI includes a scatter free projection of the at least one component 102.

The processor 116 is further configured to collect, in presence of the anti-scatter unit 106 (shown in **FIG. 3****),** the second projection 122 of the at least one component 102 at the imaging beam receiver 114. The second projection 122 includes the primary image PI of the at least one component 102. In the present disclosure, the anti-scatter unit 106 is used while collecting the primary image PI (i.e., scatter free projection) of an object, however, other techniques may also be used to obtain a scatter free projection of an object subjected to scanning. In the illustrated embodiment of **FIGS. 2** **and** **3****,** the support platform is in a first position P1.

The processor 116 is further configured to compare the first projection 120 and the second projection 122. In some embodiments, the processor 116 is configured to compare the first projection 120 and the second projection 122 by subtracting the second projection 122 from the first projection 120. In other applications, the first projection may be subtracted from the second projection. Upon comparing the first projection 120 and the second projection 122, the processor 116 is further configured to generate the scatter image SI based on the comparison of the first projection 120 and the second projection 122. In some embodiments, the processor 116 is configured to generate the scatter image SI by subtracting the second projection 122 from the first projection 120. The processor 116 is further configured to store the scatter image SI of the at least one component 102 in the memory 118.

The processor 116 is further configured to collect, at different relative angles of rotation and/or revolution of the support platform 104 and in absence of the anti-scatter unit 106, further projections of the plurality of components 102 at the imaging beam receiver 114. The support platform 104 is configured to rotate and/or revolve by a second angular range AR2 relative to the imaging beam source 108 and the imaging beam receiver 114 about one or more axes. When the support platform 104 is rotated by the second angular range AR2, the support platform 104 moves from the first position P1 (shown in **FIG. 2****)** to another position. In some embodiments, the second angular range AR2 is at least 5 degrees, at least 10 degrees, at least 15 degrees, at least 25 degrees, at least 35 degrees, at least 50 degrees, at least 65 degrees, at least 95 degrees, at least 125 degrees, at least 140 degrees, at least 155 degrees, at least 175 degrees, at least 200 degrees, at least 230 degrees, at least 270 degrees, or at least 290 degrees.

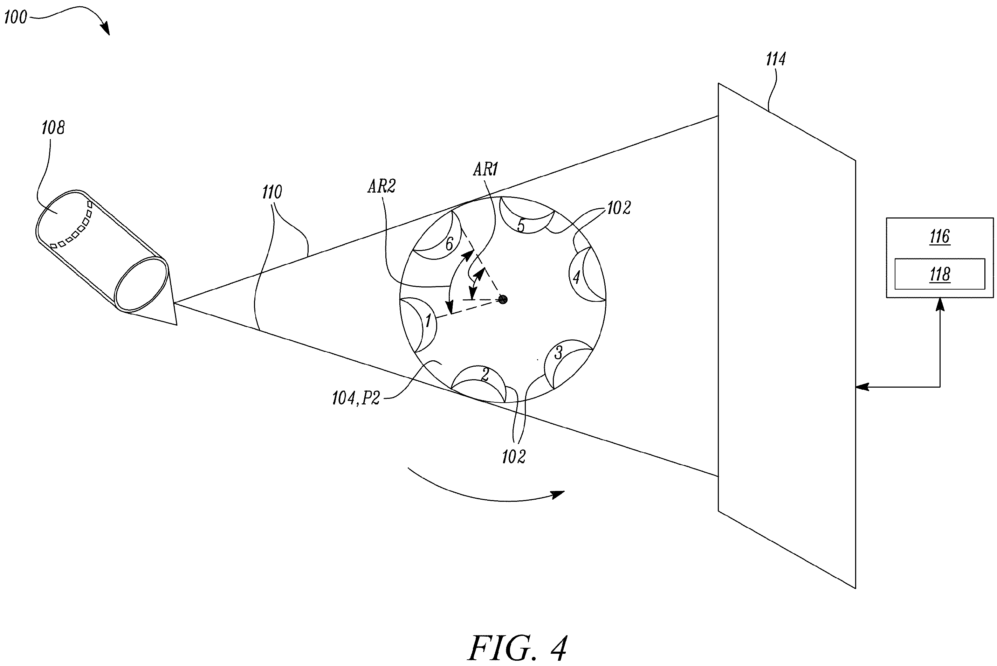

**FIG. 4** is a schematic view of the scanning apparatus 100, wherein the support platform 104 is shown in a second position P2 which is a result of rotation of the support platform 104 by the second angular range AR2 relative to the first position P1. The second angular range AR2 is equal to or greater than the first angular range AR1 by at most 20 degrees. In the illustrated embodiment of **FIG. 4****,** the second angular range AR2 is about 75 degrees.

It is evident from **FIG. 4****,** that the all the components 102 (depicted by numerals 1, 2, 3, 4, 5, and 6) are moved from its previous position to a new position due to rotation of the support platform 104 by the second angular range AR2. However, it should be noted that only the support platform 104 is rotated by the second angular range AR2, therefore the angle between different components would not change. In other words, the plurality of adjacent components 102 would remain spaced apart from each other by the first angular range AR1.

The processor 116 is further configured to compare the further projections and the scatter image SI. In some embodiments, the processor 116 is further configured to compare the further projections and the scatter image SI by subtracting the scatter image SI from each of the further projections. Upon comparing the further projections and the scatter image SI, the processor 116 is further configured to generate further primary images of the plurality of components 102. In some embodiments, the processor 116 is configured to generate the further primary images of the plurality of components 102 by subtracting the scatter image SI from each of the corresponding further projections. The further primary images include corresponding further scatter free projections of the plurality of components 102

With axi-symmetric arrangement of the plurality of components 102 of similar design on the support platform 104, and with each component spaced apart by a predetermined angular range (i.e., the first angular range AR1), the scanning apparatus 100 may eliminate a need for a full 360-degrees rotation for collecting projections of various components 102. This arrangement of the plurality of components 102 may ensure periodic repetition of the further projections at different relative angles of rotation and/or revolution of the support platform 104 by the second angular range AR2. Such periodic repetition of the further projections may enable the scanning apparatus 100 to perform scatter correction only once. This may significantly reduce scanning time and computational efforts required to generate the reference scatter image SI, which was otherwise needed to be generated for each projection in conventional scanning techniques. Therefore, the scanning apparatus 100 may improve efficiency and accuracy of the scanning process for investigating the plurality of components 102 of similar design. Accordingly, the scanning apparatus 100 may enable the simultaneous and effective scanning of the plurality of components 102, which may further reduce operational cost involved with the scanning.

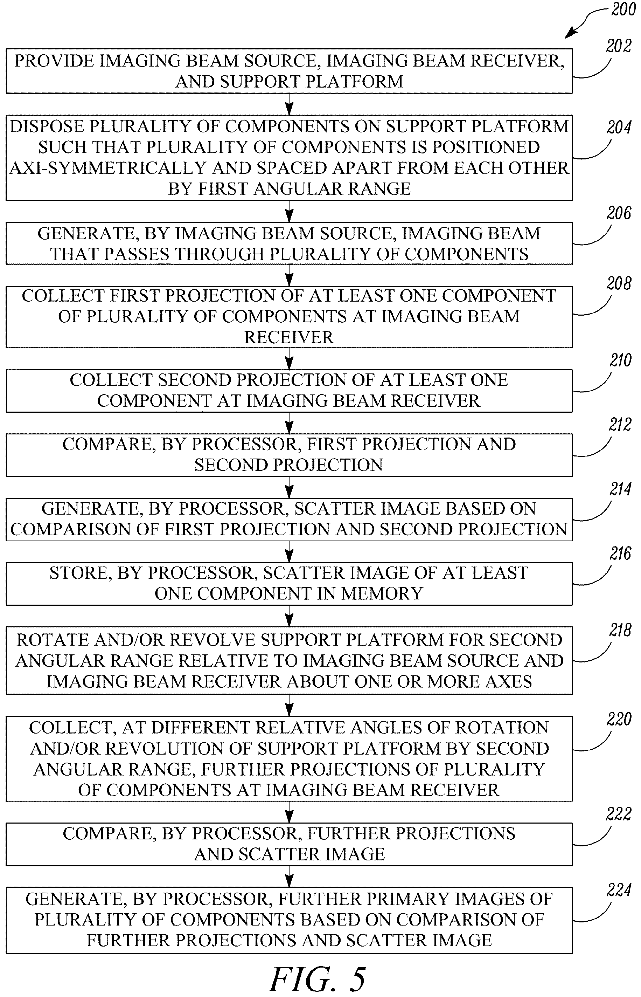

**FIG. 5** is a flowchart of a method 200 for scanning the plurality of components 102 shown in **FIGS. 2 to 4****,** according to an embodiment of the present disclosure. The method 200 may be at least partly performed by the scanning apparatus 100 of **FIGS. 2 to 4****.** Referring to **FIGS. 2 to 5****,** at step 202, the method 200 includes providing the imaging beam source 108, the imaging beam receiver 114, and the support platform 104. The imaging beam source 108 and the imaging beam receiver 114 are oppositely disposed to either side of the support platform 104.

At step 204, the method 200 further includes disposing the plurality of components 102 on the support platform 104 such that the plurality of components 102 is positioned axi-symmetrically and spaced apart from each other by the first angular range AR1.

At step 206, the method 200 further includes generating, by the imaging beam source 108, the imaging beam 110 that passes through the plurality of components 102. At step 208, the method 200 further includes collecting the first projection 120 of at least one component 102 of the plurality of components 102 at the imaging beam receiver 114.

At step 210, the method 200 further includes collecting the second projection 122 of the at least one component 102 at the imaging beam receiver 114. In some embodiments, for collecting the second projection 122, the method 200 further includes selectively disposing the anti-scatter unit 106 either between the support platform 104 and the imaging beam receiver 114, or between the support platform 104 and the imaging beam source 108. In some embodiments, collecting the second projection 122 of the at least one component 102 at the imaging beam receiver 114 further includes collecting the second projection 122 of the at least one component 102 at the imaging beam receiver 114, while the anti-scatter unit 106 is disposed between the support platform 104 and the imaging beam receiver 114, or between the support platform 104 and the imaging beam source 108.

At step 212, the method 200 further includes comparing, by the processor 116, the first projection 120 and the second projection 122. In some embodiments, comparing the first projection 120 and the second projection 122 includes subtracting the second projection 122 from the first projection 120.

At step 214, the method 200 further includes generating, by the processor 116, the scatter image SI based on the comparison of the first projection 120 and the second projection 122. In some embodiments, the method 200 includes generating the scatter image SI based on subtraction of the second projection 122 from the first projection 120. By subtracting the second projection 122 from the first projection 120, a reference scatter image is generated, which may be used for scatter correction.

At step 216, the method 200 further includes storing, by the processor 116, the scatter image SI of the at least one component 102 in the memory 118. At step 218, the method 200 further includes rotating and/or revolving the support platform 104 by the second angular range AR2 relative to the imaging beam source 108 and the imaging beam receiver 114 about one or more axes. The second angular range AR2 is equal to the first angular range AR1 or greater than the first angular range AR1 by at most 20 degrees.

At step 220, the method 200 further includes collecting, at different relative angles of rotation and/or revolution of the support platform 104 by the second angular range AR2, further projections of the plurality of components 102 at the imaging beam receiver 114. In some embodiments, the method 200 further includes maintaining substantially similar imaging parameters while collecting the further projections.

At step 222, the method 200 further includes comparing, by the processor 116, the further projections and the scatter image SI. In some embodiments, comparing the further projections and the scatter image SI includes subtracting the scatter image SI from each of the further projections. In some embodiments, the method 200 includes generating the further primary images of the plurality of components 102 based on subtraction of the scatter image SI from each of the corresponding further projections.

At step 224, the method 200 further includes generating, by the processor 116, further primary images of the plurality of components 102 based on the comparison of the further projections and the scatter image SI, the further primary images include corresponding further scatter free projections of the plurality of components 102. The reference scatter image is then subtracted from the further projections of the plurality of components 102. Accordingly, a high-quality primary image is obtained while minimizing an impact of scatter.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A method (200) for scanning a plurality of components (102) of similar design, the method (200) comprising:
providing an imaging beam source (108), an imaging beam receiver (114), and a support platform (104), wherein the imaging beam source (108) and the imaging beam receiver (114) are oppositely disposed to either side of the support platform (104);
disposing the plurality of components (102) on the support platform (104) such that the plurality of components (102) is positioned axi-symmetrically and spaced apart from each other by a first angular range (AR1);
generating, by the imaging beam source (108), an imaging beam (110) that passes through the plurality of components (102);
collecting a first projection (120) of at least one component (102) of the plurality of components (102) at the imaging beam receiver (114), the first projection (120) comprising a combination of a primary image (PI) of the at least one component (102) and a scatter image (SI) of the at least one component (102), wherein the primary image (PI) comprises a scatter free projection of the at least one component (102);
collecting a second projection (122) of the at least one component (102) at the imaging beam receiver (114), the second projection (122) comprising the primary image (PI) of the at least one component (102);
comparing, by a processor (116), the first projection (120) and the second projection (122);
generating, by the processor (116), the scatter image (SI) based on the comparison of the first projection (120) and the second projection (122);
storing, by the processor (116), the scatter image (SI) of the at least one component (102) in a memory (118);
rotating and/or revolving the support platform (104) by a second angular range (AR2) relative to the imaging beam source (108) and the imaging beam receiver (114) about one or more axes, wherein the second angular range (AR2) is equal or greater than the first angular range (AR1) by at most 20 degrees;
collecting, at different relative angles of rotation and/or revolution of the support platform (104) by the second angular range (AR2), further projections of the plurality of components (102) at the imaging beam receiver (114);
comparing, by the processor (116), the further projections and the scatter image (SI); and
generating, by the processor (116), further primary images of the plurality of components (102) based on the comparison of the further projections and the scatter image (SI), the further primary images comprising corresponding further scatter free projections of the plurality of components (102).

2. The method (200) of claim 1, wherein comparing the first projection (120) and the second projection (122) comprises subtracting the second projection (122) from the first projection (120), and wherein the method (200) comprises generating the scatter image (SI) based on subtraction of the second projection (122) from the first projection (120).

3. The method (200) of claim 1 or claim 2, wherein comparing the further projections and the scatter image (SI) comprises subtracting the scatter image (SI) from each of the further projections, and wherein the method (200) comprises generating the further primary images of the plurality of components (102) based on subtraction of the scatter image (SI) from each of the corresponding further projections.

4. The method (200) of any one of claims 1 to 3, wherein the first angular range (AR1) is at least 5 degrees, at least 10 degrees, at least 20 degrees, at least 30 degrees, at least 45 degrees, at least 60 degrees, at least 90 degrees, at least 120 degrees, at least 135 degrees, at least 150 degrees, at least 170 degrees, at least 200 degrees, at least 230 degrees, or at least 270 degrees.

5. The method (200) of any one of claims 1 to 4, wherein the second angular range (AR2) is at least 5 degrees, at least 10 degrees, at least 15 degrees, at least 25 degrees, at least 35 degrees, at least 50 degrees, at least 65 degrees, at least 95 degrees, at least 125 degrees, at least 140 degrees, at least 155 degrees, at least 175 degrees, at least 200 degrees, at least 230 degrees, at least 270 degrees, or at least 290 degrees.

6. The method (200) of any one of claims 1 to 5, wherein the plurality of components (102) is positioned axi-symmetrically in a two-dimensional geometrical figure, such as a circle, a triangle, an ellipse, a rectangle, a square, or a polygon.

7. The method (200) of any one of claims 1 to 5, wherein the plurality of components (102) is positioned axi-symmetrically in a three-dimensional geometrical figure, such as an ellipsoid, a sphere, a cube, a cuboid, a prism, or a cylinder.

8. The method (200) of any one of claims 1 to 5, wherein the plurality of components (102) is positioned axi-symmetrically in two or more concentric geometrical figures.

9. The method (200) of any one of claims 1 to 8, further comprising maintaining substantially similar imaging parameters while collecting the further projections.

10. The method (200) of any one of claims 1 to 9, further comprising selectively disposing an anti-scatter unit (106) either between the support platform (104) and the imaging beam receiver (114) or between the support platform (104) and the imaging beam source (108).

11. The method (200) of claim 10, wherein collecting the second projection (122) of the at least one component (102) at the imaging beam receiver (114) further comprises collecting the second projection (122) of the at least one component (102) at the imaging beam receiver (114) while the anti-scatter unit (106) is disposed between the support platform (104) and the imaging beam receiver (114), or between the support platform (104) and the imaging beam source (108).

12. A scanning apparatus (100) for scanning a plurality of components (102) of similar design, the scanning apparatus (100) comprising:
an imaging beam source (108) configured to generate an imaging beam (110) that passes through the plurality of components (102);
an imaging beam receiver (114) configured to receive the imaging beam (110), such that the plurality of components (102) is disposed between the imaging beam source (108) and the imaging beam receiver (114);
an anti-scatter unit (106);
a support platform (104) configured to support the plurality of components (102), wherein the support platform (104) is configured to rotate and/or revolve relative to the imaging beam source (108) and the imaging beam receiver (114) about one or more axes, wherein the support platform (104) is disposed between the imaging beam source (108) and the imaging beam receiver (114), wherein the plurality of components (102) is positioned axi-symmetrically and spaced apart from each other by a first angular range (AR1); and
a processor (116) communicably coupled to the imaging beam receiver (114) and configured to:
collect, in absence of the anti-scatter unit (106), a first projection (120) of at least one component (102) of the plurality of components (102) at the imaging beam receiver (114), the first projection (120) comprising a combination of a primary image (PI) of the at least one component (102) and a scatter image (SI) of the at least one component (102), wherein the primary image (PI) comprises a scatter free projection of the at least one component (102);
collect, in presence of the anti-scatter unit (106), a second projection (122) of the at least one component (102) at the imaging beam receiver (114), the second projection (122) comprising the primary image (PI) of the at least one component (102);
compare the first projection (120) and the second projection (122);
generate the scatter image (SI) based on the comparison of the first projection (120) and the second projection (122);
store the scatter image (SI) of the at least one component (102) in a memory (118);
collect, at different relative angles of rotation and/or revolution of the support platform (104) and in absence of the anti-scatter unit (106), further projections of the plurality of components (102) at the imaging beam receiver (114), wherein the support platform (104) is configured to rotate and/or revolve by a second angular range (AR2) relative to the imaging beam source (108) and the imaging beam receiver (114) about one or more axes, wherein the second angular range (AR2) is equal to or greater than the first angular range (AR1) by at most 20 degrees;
compare the further projections and the scatter image (SI); and
generate further primary images (PI) of the plurality of components (102) based on the comparison of the further projections and the scatter image (SI), the further primary images comprising corresponding further scatter free projections of the plurality of components (102).

13. The scanning apparatus (100) of claim 12, wherein the processor (116) is further configured to:
compare the first projection (120) and the second projection (122) by subtracting the second projection (122) from the first projection (120); and
generate the scatter image (SI) by subtracting the second projection (122) from the first projection (120).

14. The scanning apparatus (100) of claim 12 or claim 13, wherein the processor (116) is further configured to:
compare the further projections and the scatter image (SI) by subtracting the scatter image (SI) from each of the further projections; and
generate the further primary images of the plurality of components (102) by subtracting the scatter image (SI) from each of the corresponding further projections.

15. The scanning apparatus (100) of any one of claims 12 to 14, wherein the anti-scatter unit (106) is selectively disposed either between the support platform (104) and the imaging beam receiver (114), or between the support platform (104) and the imaging beam source (114).
